Europäisches Patentamt

European Patent Office

Office européen des brevets

(11) Publication number: **0 272 078 B1**

# EUROPEAN PATENT SPECIFICATION

(45) Date of publication of patent specification: **19.02.92**  (51) Int. Cl.⁵: **G01C 21/22**, G09B 29/10

(21) Application number: **87311003.5**

(22) Date of filing: **15.12.87**

(54) **Apparatus for display travel path.**

(30) Priority: **15.12.86 JP 298356/86**

(43) Date of publication of application:
**22.06.88 Bulletin 88/25**

(45) Publication of the grant of the patent:
**19.02.92 Bulletin 92/08**

(84) Designated Contracting States:
**DE FR GB**

(56) References cited:
**US-A- 4 517 565**
**US-A- 4 521 777**

**PATENT ABSTRACTS OF JAPAN, vol. 8, no.
51 (P-259)[1488], 8th March 1984; & JP-A-58
201 018 (HONDA GIKEN KOGYO K.K.)
22-11-1983**

**PATENT ABSTRACTS OF JAPAN, vol. 9, no.
90 (P-350)[1813], 19th April 1985; & JP-A-59
218 914 (HONDA GIKEN KOGYO K.K.)
10-12-1984**

(73) Proprietor: **HONDA GIKEN KOGYO KABUSHIKI
KAISHA
1-1, Aoyama 2-chome
Minato-ku Tokyo 107(JP)**

(72) Inventor: **Iihoshi, Akira**
**c/o Honda Gijutsu Kenkyusho 4-1, 1-chome,
Chuo**
**Waki-shi Saitama(JP)**
Inventor: **Nakamura, Yukinobu**
**c/o Honda Gijutsu Kenkyusho 4-1, 1-chome,
Chuo**
**Waki-shi Saitama(JP)**
Inventor: **Yasui, Shinichiro**
**c/o Honda Gijutsu Kenkyusho 4-1, 1-chome,
Chuo**
**Waki-shi Saitama(JP)**

(74) Representative: **Muir, Ian R. et al**
**HASELTINE LAKE & CO. Hazlitt House 28
Southampton Buildings Chancery Lane
London WC2A 1AT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a travel path displaying apparatus in which a current location and a path of travel of a running body, such as an automobile, are displayed on a display screen which has a map previously displayed thereon.

In an attempt to prevent a driver of an automobile or the like from losing his way by driving, for example in an unfamiliar place, off his desired travel path, there has been developed a travel path displaying apparatus including: a distance detector, for detecting a distance of travel of a running body; and a direction detector for detecting a running direction (e.g. US-A-4 517 565). In this apparatus, the current location of the running body, in a two-dimensional coordinate system, is successively computed from the respective results of the above-mentioned detections. The location thus computed is displayed on a display screen having a map, with azimuthal coordinates corresponding to said two-dimensional coordinates.

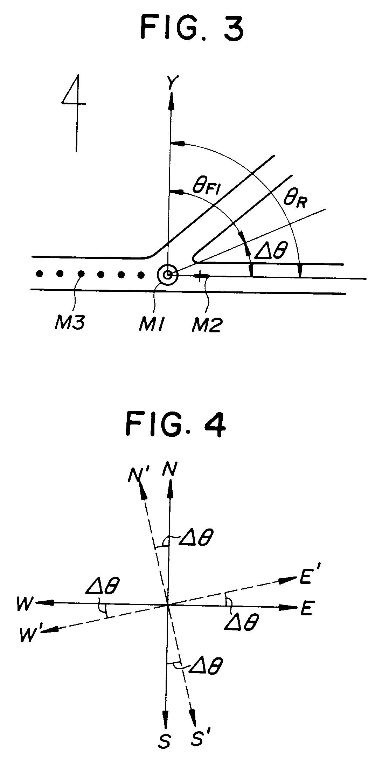

In such a travel path displaying apparatus, in which the direction detector includes a geomagnetism sensor, there is an angle of declination $\Delta\theta$, as shown in Fig. 4, between an azimuth detected by the geomagnetism sensor (as indicated by a broken line in Fig. 4) and an azimuth on the map (as indicated by a solid line in Fig. 4). The magnitude of this angle $\Delta\theta$ depends upon the location of the apparatus. In Japan, the angle of declination $\Delta\theta$ varies from $6^\circ$ - $10^\circ$ and, in some areas of the world, the angle of declination $\Delta\theta$ may be several tens of degrees. Accordingly, it is necessary to effect a correction, by the angle of declination, in the running direction of the running body as detected by the geomagnetism sensor.

Heretofore, it has been a practice to determine, in advance, the angle of declination over a particular area shown on a map which is used to display the travel path, and then to effect an arithmetical operation to correct the running direction of the running body, as detected by the geomagnetism sensor, by the angle of declination, using a signal processing device.

However, it is inconvenient to need to previously register accurate declination data with respect to maps of a plurality of areas, and to read out the declination data relating to the area of interest, depending upon the map which is to be used in the display of the travel path.

In view of the disadvantages of the prior art, it is an object of the present invention to provide a travel path displaying apparatus in which a running direction of a running body is detected by means of a geomagnetism sensor, which enables correction for the angle of declination in the running direction of the running body as detected by the geomagnetism sensor, without requiring the preparation of declination data for each of the maps of the respective areas which are used to display the travel path.

According to the present invention, there is provided an apparatus for displaying a travel path of a running body, including: a distance detector for detecting a distance of travel of the running body; and a direction detector for detecting a running direction, the direction sensor comprising a geomagnetism sensor and a rate-type sensor, wherein a current location of the running body in a two-dimensional coordinate system is successively computed from the detections effected by the distance and direction detectors, and the location thus computed is displayed on a display screen, characterised in that the apparatus comprises means for calculating a difference angle, between a running direction detected by the rate-type sensor and a running direction detected by the geomagnetism sensor, for storing the calculated difference angle at a time when power to the apparatus is switched off, and for effecting correction of a running direction detected by the geomagnetism sensor when power to the apparatus is switched on, on the basis of the stored difference angle.

The rate-type sensor may be any appropriate non-geomagnetic type direction sensor such as, for example, a gyroscope, or a gas rate sensor, including a flow sensor for detecting the degree of displacement of a gas flow produced by an angular velocity applied thereto.

For a better understanding of the present invention, and to show how the same may be brought into effect, reference will now be made, by way of example, to the accompanying drawings, in which:-

Fig. 1 is a block diagram showing an example of the travel path displaying apparatus according to the present invention;

Fig. 2 shows an example of a display produced by the travel path displaying apparatus;

Fig. 3 is a diagram showing the interrelation between the running direction of the moving body as detected by the rate-type sensor and the running direction of the moving body detected by the geomagnetism sensor; and

Fig. 4 is a diagram showing the interrelation between the azimuth on the map and the azimuth detected by the geomagnetism sensor.

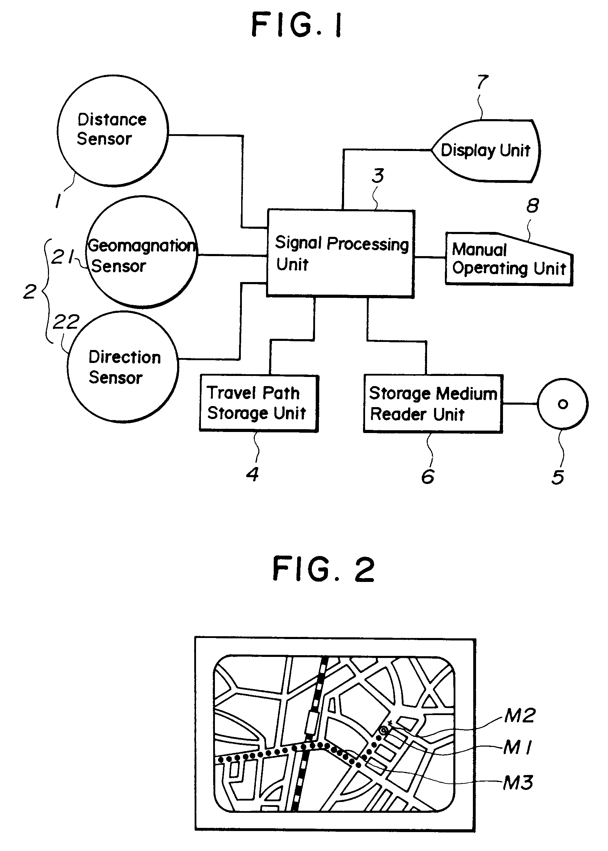

Fig. 1 shows an example of the fundamental construction of the travel path displaying apparatus according to the present invention. The apparatus includes a distance sensor 1, of, for example, the photoelectric, electromagnetic, or mechanical contact type or the like, for generating pulse signals corresponding to the distance travelled by the running body, depending on, for example, the rotation of a wheel of said running body. In addition, the apparatus also includes a direction sensor 2 for generating signals corresponding to the running direction of the running body, by detecting changes in the angular velocity in the yaw direction, and a signal processing unit (CPU) 3. The CPU counts the number of pulse signals sent from the distance sensor 1, to measure the distance travelled by the running body, and also determines changes in the running direction of the running body. These changes are calculated on the basis of the output signal from said direction sensor 2. Thus, the CPU 3 successively computes the current location of the vehicle in the two-dimensional coordinate system at unit distances of travel of the running body. The apparatus also includes a travel path storing means (RAM) 4, for successively storing the data concerning the constantly changing location in the two-dimensional coordinate system, as generated by said signal processing unit.

Also provided are a map information storage medium 5, in which a plurality of file units of map information are previously stored, a storage medium reader unit 6, for selectively reading out the desired map file from the storage medium 5, and a display unit 7, for displaying a map on a display screen in accordance with the map information from the reader unit 6, and for displaying the current location of the running body, the path travelled, the current running direction and other information on the same display screen, on the basis of the location data stored in the storage unit 4. A manual operating unit 8 is provided for entering an operation command to the signal processing unit 3, and for effecting various other operations including selection of the map to be displayed on the display unit 7, setting of the starting point of the vehicle on the displayed map, change of orientation of the displayed map and the travel path, shifting of the displayed position, change of the setting of the displayed form, for example by the partial enlargement of the map display or the selection of a reduced scale.

In the construction described above, a map, corresponding to an expected running area, is accessed and read out from the map information storage medium, and then displayed on the display screen of the display unit 7. At the same time, the current location of the vehicle, in the two-dimensional X-Y coordinate system having north and south directions corresponding to those of the map, is successively computed, as the running body travels from the starting point set on the map. The computation is carried out by means of the signal processing unit 3 on the previously set reduction scale of the map and the results of the computation are successively sent to the travel path storage unit 4 and stored therein, so that the content of the storage is renewed, constantly read out and sent to the display unit 7.

As shown in Fig. 2, the display unit 7 has a display mark M1 indicating the current location of the running body on the map, a display mark M2 indicating the running direction of the running body at the current location, and a display mark M3 indicating the travel path from the starting point to the current location. These marks indicate the running status of the running body.

In accordance with the present invention, the direction detector 2 includes a geomagnetism sensor 21 and a rate-type sensor 22.

The rate-type sensor 22 may be, for example, a gyroscope, or a gas rate sensor, including a flow sensor for detecting the degree of displacement of a gas flow produced by an angular velocity applied thereto. The rate-type sensor 22 has an accurate direction detecting characteristic in its stationary state, but there are problems with its use in that its sensitivity increases from the time when its power source is turned on. Thus, it requires a relatively long time until a stable operating state is reached. On the other hand, the geomagnetism sensor 21 reaches a stable operating state as soon as its power source is turned on, but its use involves the problem that it is susceptible to a disturbance when the moving body is passing over a railway crossing, or under an iron bridge or the like, and so the detected direction may become incorrect.

In accordance with an embodiment of the present invention, only the advantageous properties of the geomagnetism sensor 21 and the rate-type sensor 22 are utilised. That is, at the time when the power switch of the travel path displaying apparatus is switched on, the geomagnetism sensor 21 is used to effect the direction detection, and, after a predetermined time sufficient to allow the rate-type sensor 22 to reach a stable operating state, the sensor is changed over from the geomagnetism sensor 21 to the rate-type sensor 22 and the direction detection is thereafter effected by the rate-type sensor. This process is controlled by the signal processing unit 3.

In use of a travel path displaying apparatus of this type, when the moving body is temporarily stopped, for example for the purpose of supplying fuel, and thus the power source of the travel path displaying apparatus is turned off, the angle $\theta R$ of the running direction of the moving body detected by the rate-type sensor 22 and the angle $\theta F1$ of the running direction detected by the geomagnetism sensor 21 differ by an angle $\Delta\theta$, as shown in Fig. 3. This angle difference $\Delta\theta$ is temporarily stored in an internal memory, and, when the power source is turned on to restart the moving body, the angle $\theta F2$ of the running direction of the moving body, as detected by the geomagnetism sensor 21, is corrected on the basis of the angle difference $\Delta\theta$ stored in the memory. The corrected running direction $\theta F2'$, of the moving body is represented by the following formulae.

$$\theta F2' = \theta F2 + \Delta\theta \quad (1)$$
$$\Delta\theta = \theta R - \theta F1 \quad (2)$$

At this stage, the angle $\theta R$ of the running direction of the running body as detected by the rate-type sensor corresponds to the azimuthal coordinates of the map on which the travel path is displayed and at this time the angle difference $\Delta\theta$ relative to the angle $\theta F2$ of the running direction as detected by the geomagnetism sensor 21 corresponds to the declination of the geomagnetism sensor 21.

Thus, the present invention provides travel path displaying apparatus in which, in use, at the time when the power source is turned off, the declination of the running direction as detected by the geomagnetism sensor is corrected on the basis of the angle difference relative to the running direction detected by the rate-type sensor. Using this apparatus it is not necessary to previously prepare declination data for each map in the areas in which the travel path displaying apparatus is used, and the correction of declination can be easily effected by a simple computing process to successively obtain the declination data.

## Claims

1. An apparatus for displaying a travel path of a running body, including: a distance detector (1) for detecting a distance of travel of the running body; and a direction detector (2) for detecting a running direction, the direction detector (2) comprising a geomagnetism sensor (2) and a rate-type sensor (22), wherein a current location of the running body in a two-dimensional coordinate system is successively computed from the detections effected by the distance and direction detectors, and the location thus computed is displayed on a display screen (7), characterised in that the apparatus comprises means (3) for calculating a difference angle, between a running direction detected by the rate-type sensor and a running direction detected by the geomagnetism sensor, for storing the calculated difference angle at a time when power to the apparatus is switched off, and for effecting correction of a running direction detected by the geomagnetism sensor when power to the apparatus is switched on, on the basis of the stored difference angle.

2. An apparatus as claimed in claim 1, wherein, when power to the apparatus is switched on, the location of the running body is computed, for a predetermined time, using the running direction detected by the geomagnetism sensor, corrected on the basis of the stored difference angle, and wherein the location of the running body is calculated, after the predetermined time, using the running direction detected by the rate-type sensor.

## Revendications

1. Appareil pour l'affichage d'une trajectoire de déplacement d'un mobile, comprenant : un détecteur de distance (1) pour détecter une distance de déplacement du mobile ; et un détecteur de direction (2) pour détecter une direction de mouvement, le détecteur de direction (2) comprenant un capteur géomagnétique (2) et un capteur de vitesse (22), où la position actuelle du mobile dans un système de coordonnées bi-dimensionnelles est successivement calculée à partir des détections effectuées par les détecteurs de distance et de direction, et la position ainsi calculée est affichée sur un écran de visualisation (7), caractérisé en ce que l'appareil comprend :
un moyen (3) pour calculer une différence d'angle entre une direction de mouvement détectée par le capteur de vitesse et une direction de mouvement détectée par le capteur géomagnétique, pour mémoriser la différence d'angle calculée au moment où l'alimentation à l'appareil est coupée, et pour effectuer la correction d'une direction de mouvement détectée par le capteur géomagnétique lorsque l'alimentation à l'appareil est mise en route, sur la base de la différence d'angle mémorisée.

2. Appareil suivant la revendication 1, cractérisé en ce que, lorsque l'alimentation à l'appareil est mise en route, la position du mobile est calculée, pendant une durée prédéterminée, en utilisant la direction de mouvement détectée par le capteur géomagnétique, corrigée sur la base de la différence d'angle mémorisée, et caractérisé en ce que la position du mobile est calculée, après le temps prédéterminé, en utilisant la direction de mouvement détectée par le capteur de vitesse.

## Patentansprüche

1. Vorrichtung zur Anzeige einer Wegstrecke eines bewegten Körpers, mit:
einem Entfernungsdetektor (1) zum Messen einer zurückgelegten Wegstrecke des bewegten Körpers und

einem Richtungsdetektor (2) zum Messen einer Bewegungsrichtung, der einen Erdmagnetfeldsensor (2) und einen Abweichungssensor (rate-type sensor) (22) aufweist, in der ein aktueller Standort des bewegten Körpers in einem zweidimensionalen Koordinatensystem schrittweise aus den Meßwerten berechnet wird, die durch die Entfernungs- und Richtungsdetektoren gewonnen werden, und der so berechnete Standort auf dem Anzeigeschirm (7) angezeigt wird,

**gekennzeichnet** durch

Mittel (3) zur Berechnung eines Differenzwinkels zwischen einer vom Abweichungssensor gemessenen Bewegungsrichtung und einer vom Erdmagnetfeldsensor gemessenen Bewegungsrichtung, zur Speicherung des berechneten Differenzwinkels beim Abschalten der Versorgung der Vorrichtung und zur Ausführung der Korrektur einer vom Erdmagnetfeldsensor gemessenen Bewegungsrichtung auf Basis des gespeicherten Differenzwinkels beim Einschalten der Versorgung der Vorrichtung.

2. Vorrichtung nach Anspruch 1, in der beim Einschalten der Versorgung der Vorrichtung der Standort des bewegten Körpers eine festgelegte Zeit lang unter Benutzung der vom Erdmagnetfeldsensor angezeigten Bewegungsrichtung berechnet wird, auf Basis des gespeicherten Differenzwinkels korrigiert wird, und in der der Standort des bewegten Körpers nach der festgelegten Zeit unter Benutzung der vom Abweichungssensor gemessenen Bewegungsrichtung berechnet wird.

# FIG. 1

Distance Sensor — *1*

Geomagnation Sensor — *21*

Direction Sensor — *22*

*2*

Signal Processing Unit — *3*

Display Unit — *7*

Manual Operating Unit — *8*

Travel Path Storage Unit — *4*

Storage Medium Reader Unit — *6*

*5*

# FIG. 2

M2

M1

M3

# FIG. 3

# FIG. 4